# EUROPEAN PATENT APPLICATION

(11) **EP 1 276 280 A2**
(43) Date of publication of application: **15.01.2003**
(21) Application number: 02012779.1
(22) Date of filing: 10.06.2002
(51) Int. Cl.: H04L 12/56, H04L 12/46

(54) **L2/L3 network with LSP-enabled virtual routing**

(30) Priority: 03.07.2001 US 302967 P; 18.09.2001 US 955371
(71) Applicant: Alcatel Internetworking, Inc., Calabasas, CA 91301 (US)
(72) Inventor: Erb, Guy C., Spokane, Washington 99201 (US); Touve, Jeremy, Spokane, Washington 99216 (US)
(74) Representative: Dreiss, Fuhlendorf, Steimle & Becker

(57) **Abstract**

An L2/L3 network (e.g., Multi-protocol Label Switched (MPLS) network) having an MPLS-enabled router and a plurality of MPLS-enabled bridges is provided for implementing Label Switched Path (LSP)-enabled virtual routing. The router may be at the edge of the network and may be an Egress Label Switching Router (E-LSR). The E-LSR may also function as an LSR and/or as an ingress LSR (I-LSR) for multiple LSPs at the same time at line rate. The E-LSR may receive a packet from one of the bridges over an LSP, remove a label (e.g., MPLS label), and then route the PDU to an external network using IP (e.g., IPv4 or IPv6) protocol. In addition, the E-LSR may also receive a packet from one of the bridges over an LSP, remove a label, route or bridge the packet, apply a new label, and then label switch it to one of the VLAN bridges over an LSP. Further, the E-LSR may also receive a packet from one of the bridges over an LSP, swap labels, and then label switch it to one of the bridges over an LSP.

## Description

### CROSS-REFERENCE TO RELATED APPLICATION(S)

The present application claims the priority of U.S. Provisional Application No. 60/302,967 entitled "L2/L3 Network with LSP-Enabled Virtual Routing," filed July 3, 2001, the contents of which are fully incorporated by reference herein.

### FIELD OF THE INVENTION

The present invention is related to L2/L3 networks, and particularly to an implementation of Multi-protocol Label Switching (MPLS).

### BACKGROUND OF THE INVENTION

In networks that support both bridging and routing (i.e., Layer 2/Layer 3 (L2/L3) networks), it is typical to install switching nodes having both bridging and routing capabilities (i.e. bridge/routers) and to configure such nodes to bridge local protocol data units (PDUs) and route non-local PDUs. Such an arrangement typically implies creating switching nodes with substantially more overhead than switching nodes that have one forwarding capability or the other, thus resulting in increased complexity and expenses when creating the network.

It is possible to avoid such overhead by installing switching nodes having only a bridging capability (i.e. bridge) or a routing capability (i.e. router) and to configure the bridges to bridge non-local PDUs to an external router for routing. However, bridging PDUs to an external router has associated with it all the inefficiencies inherent to bridging, such as, for example, unnecessary flooding, inability to guarantee bandwidth and limited ability to prioritize.

Therefore, it is desirable to implement an L2/L3 network that supports bridging and routing but that requires neither bridge/routers nor bridging of non-local PDUs to an external router for routing.

### SUMMARY OF THE INVENTION

In an embodiment according to the present invention, an L2/L3 network comprising a plurality of MPLS-enabled bridges, an MPLS-enabled router and a plurality of label switched paths interconnecting the respective bridges and the router is provided. The bridges bridge local protocol data units, and switch non-local protocol data units to the router on respective ones of the plurality of label switched paths, whereupon the router routes the non-local protocol data units.

In another embodiment according to the present invention, a method of forwarding protocol data units in an L2/L3 network comprising a plurality of MPLS-enabled bridges and an MPLS-enabled router interconnected over a plurality of label switched paths is provided. Local protocol data units are bridged from the bridges, and non-local protocol data units are switched from the bridges to the router over respective ones of the plurality of label switched paths. The non-local protocol data units are then routed using the router.

In yet another embodiment according to the present invention, a method of forwarding a packet in an MPLS network comprising an MPLS-enabled router and a plurality of MPLS-enabled VLAN bridges is provided. A first MPLS label is attached to the packet in one of the VLAN bridges in accordance with a VLAN associated with the packet. The packet is sent to the router over a first MPLS tunnel from said one of the VLAN bridges, then the packet is routed to another one of the VLAN bridges.

In a further embodiment according to the present invention, a communication network is provided. The communication network includes a plurality of first nodes, a second node, and at least one interconnection between each first node and said second node.

The first nodes do not have actual routing capability, whereas the second node has an actual routing capability. Each first node interacts with said second node over said at least one interconnection between said first node and said second node to provide an emulated routing capability to said first node.

### BRIEF DESCRIPTION OF THE DRAWINGS

These and other aspects of the invention may be understood by reference to the following detailed description, taken in conjunction with the accompanying drawings, which are briefly described below.
FIG. 1 is a system diagram of an L2/L3 network, which may be used to implement an embodiment according to the present invention;
FIG. 2 is a system diagram of an MPLS network in an embodiment according to the present invention;
FIG. 3 is a system diagram of an MPLS network in another embodiment according to the present invention;
FIG. 4 illustrates format for an MPLS label; and
FIG. 5 is a flow diagram of MPLS packet processing at an edge label switching router (E-LSR) in an embodiment according to the present invention.

### DETAILED DESCRIPTION

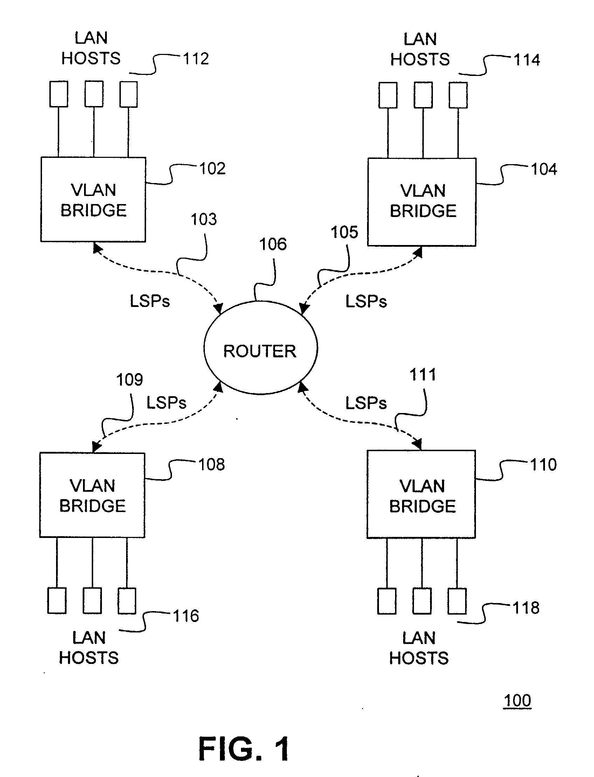

FIG. 1 is a system diagram of an exemplary L2/L3 network 100, which may be used to implement an embodiment according to the present invention. The L2/L3 network 100 comprises MPLS-enabled Virtual Local Area Network (VLAN) bridges 102, 104, 108 and 110 interconnected with one another via an MPLS-enabled router 106 over Label Switched Paths (LSPs) (e.g., Multi-protocol Label Switching (MPLS) LSPs) 103, 105, 109 and 111. Each of the LSPs 103, 105, 109 and 111 may comprise one or more LSPs. When performing MPLS functions, bridges 102, 104, 108, 110 and router 106 may be referred to as Label Switching Routers (LSRs). Each of the LSPs may comprise one or more LSRs. The LSPs may also be referred to as tunnels, LSP tunnels, MPLS tunnels (when MPLS labels are used), or by any other reference conventional in the art. The L2/L3 network 100 also comprises a plurality of LAN hosts 112, 114, 116 and 118 (Layer 2 networks) coupled to the VLAN bridges 102, 104, 108 and 110, respectively.

The L2/L3 network 100 as illustrated comprises one router 106, four VLAN bridges 102, 104, 108, 110 and LAN hosts 112, 114, 116, 118 for illustrative purposes only. In practice, as those skilled in the art would appreciate, L2/L3 networks used to implement various different embodiments of the present invention may comprise different number of routers, VLAN bridges, LAN hosts and/or other types of network devices.

The VLAN bridges 102, 104, 108 and 110 bridge local PDUs and switch non-local PDUs to the router 106 on one of the LSPs. The PDUs (or packets) may include TCP/IP packets, Ethernet frames, or PDUs of other data protocol types. The router 106, for example, may receive a PDU from one of the VLAN bridges over an LSP, remove a label, route the PDU using IP (e.g., IPv4 or IPv6) protocol, and then forward the PDU to an external network to which the PDU has been routed.

The router 106, for another example, may receive a PDU from one of the VLAN bridges over an LSP, remove a label, route or bridge the PDU internally, apply a new label, and then label switch it to a VLAN bridge over any of the LSPs including the LSP over which it received that PDU. Each LSP may include one or more hops (e.g., LSRs) between the router and the destination VLAN bridge. Routing of a PDU to the same LSP from which the PDU was received may be referred to as one arm routing. The router 106 may also receive a PDU from one of the VLAN bridges over an LSP, remove a label and add a new label in a label swap, and then forward it to one of the VLAN bridges over an LSP.

By switching non-local PDUs to the router on an LSP, the complexity and expense of installing bridge/routers may be avoided without encountering the problems associated with bridging non-local PDUs to an external router. For example, the switching of non-local PDUs to the router 106 may not involve flooding, may have an ability to guarantee bandwidth, and may allow flexibility in prioritization.

In an embodiment according to the present invention, therefore, through the use of LSPs that create a "virtual" routing presence on the VLAN bridges without having routers physically present on the VLAN bridges, a relatively simple and low-cost L2/L3 network that has performance characteristics preferably similar to L2/L3 networks with bridge/routers may be created. For example, multiple subnets (e.g., LAN hosts) associated with the same VLAN but coupled to distant VLAN bridges may be virtually connected to one another as though there is no intervening network. For another example, Layer 2 PDUs such as Ethernet frames that do not have routing information, may be routed over the Internet via label switching where the PDUs are encapsulated using labels.

In embodiments where more than one LSP exists between the router 106 and each VLAN bridge, the VLAN bridge may select a first LSP to the router 106 for transmitting a non-local PDU as a function of the VLAN associated with the non-local PDU. For example, the LSP may be selected by directly mapping the associated VLAN value to a label value (e.g., MPLS label value), thus triggering label switching using Layer 2 information.

For Layer 2 triggering, VLANs may be made special on some ports of the router 106 such that if these ports receive PDUs associated with such VLANs, the router 106 may put these PDUs into a respective tunnel. A table may be created and used for such mapping between the VLAN values and the label values. For example, the VLAN bridge 102 may select a first LSP from the LSPs 103 to transmit a non-local PDU to the router 106. For further example, the router 106 may select a second LSP for transmitting the received PDU as a function of an IP address and/or other L2/L3 addresses associated with the received PDU.

Further, the router 106 may have an ability to both remove (or pop) a label from a label stack of a received PDU and bridge or route the received PDU. This may allow configuration of LSPs between the VLAN bridges 102, 104, 108 and 110 and the router 106 that traverse zero or more intermediate nodes (which may include LSRs) and may reduce or eliminate the requirement of any intermediate node support (e.g., for an MPLS penultimate hop pop (PHP) function).

An example of an L2/L3 network is a network using MPLS Label Stack Encoding described by E. Rosen et al., Network Working Group Request for Comments (RFC) 3032, "MPLS Label Stack Encoding"(http://www.ietf.org/rfc/rfc3032.txt), dated January 2001, the contents of which are fully incorporated by reference herein. As described in RFC 3032, MPLS specifies an encapsulation method that may be applied to packets using MPLS labels. This encapsulation method allows such encapsulated packets to be easily forwarded along LSPs comprising LSRs where said paths have some kind of desired characteristic(s) (such as bandwidth or Quality of Service (QoS)). For example, using MPLS switching, non-local PDUs (with Layer 2 information) from a subnet may be encapsulated using MPLS labels and switched to another subnet without having to introduce Layer 3 information to the PDUs for Layer 3 switching.

An Egress Label Switching router (E-LSR), which typically represents an egress edge of a network, typically instructs an upstream LSR to "pop" the MPLS encapsulation from packets associated with a particular LSP so that the MPLS encapsulated packets lose their special encapsulation and rejoin the world of regular IPv4 routing.

The upstream LSR, referred to as the Penultimate Hop Pop (PHP), preferably spares the E-LSR the excessive burden of popping the MPLS encapsulation and then having to examine and forward the underlying IPv4 packet. Basically, when a MPLS encapsulated packet enters the PHP, the MPLS encapsulation is "popped" and the underlying IPv4 packet is forwarded to the E-LSR. The E-LSR can then route the packet based on its internal IPv4 information.

However, there may be problems with this method. First, the upstream device must be PHP capable, second, the configuration and management tasks are excessive since the egress step is distributed between two devices, and third, the PHP solution imposes restrictions on the type of traffic that can egress from the LSP (currently, egress traffic is limited to IPv4 or IPv6).

Therefore, in an embodiment according to the present invention, problems associated with PHP are solved by eliminating the PHP function from the upstream LSR and allowing the E-LSR to have the following abilities:
1) The E-LSR preferably should be able to "pop" the MPLS label stack (which conventionally was done by the penultimate router), thus collapsing the PHP and the E-LSR functions into a single device (whereas they are two devices in conventional implementations); and
2) The E-LSR preferably should be able to examine the underlying packet and route/bridge accordingly.
Further, the E-LSR preferably performs above operations with little or no loss of line rate processing.

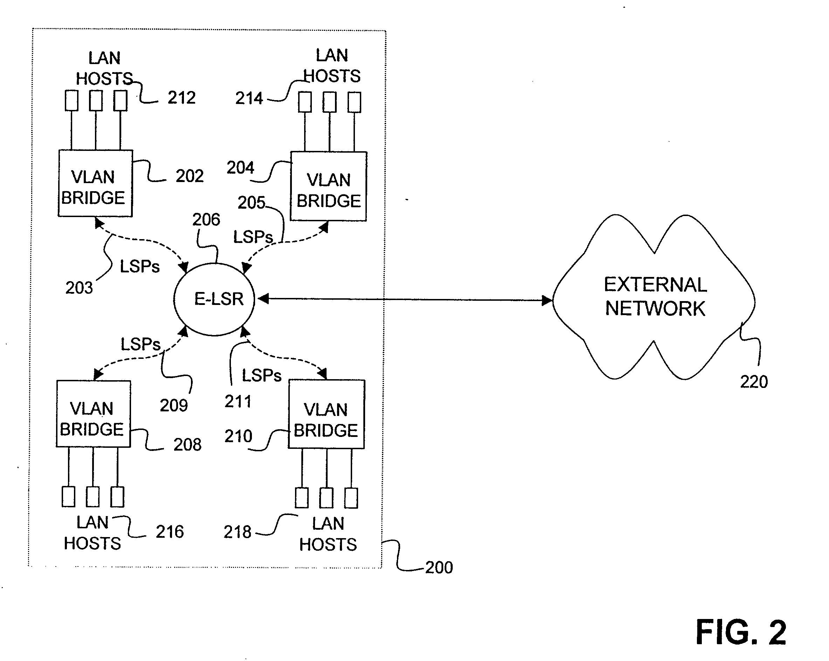

FIG. 2 is a system diagram of an MPLS network 200 in an embodiment according to the present invention. The MPLS network 200 is coupled to an external network 220. The MPLS network 200 comprises Virtual Local Area Network (VLAN) bridges 202, 204, 208 and 210 interconnected with one another via an E-LSR (edge/egress LSR) 206 over MPLS LSPs 203, 205, 209 and 211. The E-LSR 206 may also work as an LSR and/or as an ingress LSR (I-LSR). The E-LSR 206 preferably has a capability to function as an E-LSR, LSR and I-LSR for multiple LSPs at the same time while performing forwarding functions at line rate. The MPLS network 200 also comprises a plurality of LAN hosts 212, 214, 216 and 218 coupled to the VLAN bridges 202, 204, 208 and 210, respectively.

The MPLS network 200 as shown comprises one E-LSR 206, four VLAN brides 202, 204, 208, 210 and LAN hosts 212, 214, 216, 218 for illustrative purposes only. In practice, as those skilled in the art would appreciate, MPLS networks in various different embodiments according to the present invention may comprise different number of LSRs, VLAN bridges, LAN hosts and other network devices. For example, each of the LSPs 203, 205, 209 and 211 may comprise one or more LSRs that are used to perform MPLS label switching.

The E-LSR 206 is at the edge of the MPLS network 200. Thus, when the E-LSR 206 receives an MPLS packet (or an MPLS PDU) over an LSP from one of the VLAN bridges 202, 204, 208 and 210, the E-LSR 206, for example, may remove the MPLS label, route the packet using IPv4 protocol, and then forward the packet over to the external network 220 which, for example, may include L2, L3, MPLS, and/or other network devices. Further, the E-LSR 206 may forward the MPLS packet to another MPLS network (e.g., in the external network 220) after removing the MPLS label. The receiving MPLS network may then introduce to the packet a label specific to that MPLS network.

The E-LSR 206, for another example, may receive an MPLS packet from one of the VLAN bridges 202, 204, 208 and 210 over an LSP, remove the MPLS label, route or bridge the packet, apply a new MPLS label, and then label switch it to a VLAN bridge to which it has been bridged or routed, over any of the LSPs including the LSP over which it received that PDU. Each LSP may include one or more hops (e.g., LSRs) between the E-LSR and the destination VLAN bridge. Routing an MPLS packet to the LSP over which the MPLS packet has been received, may be referred to as one arm routing.

The E-LSR 206 may also receive an MPLS packet from one of the VLAN bridges 202, 204, 208 and 210 over an LSP, remove the MPLS label and add a new MPLS label in a label swap, and then forward it to one of the VLAN bridges over an LSP which may include one or more hops (e.g., LSRs) between the E-LSR 206 and the destination VLAN bridge.

Even though the MPLS network 200 has a single E-LSR 206, MPLS networks may have more than one E-LSR. However, each MPLS tunnel preferably is associated with one E-LSR, and additional E-LSRs may be used for fail over purposes, i.e., for backup when one or more LSRs in the MPLS tunnel fail, and may be controlled by MPLS/RSVP (Resource Reservation Setup Protocol) or LDP (Label Distribution Protocol).

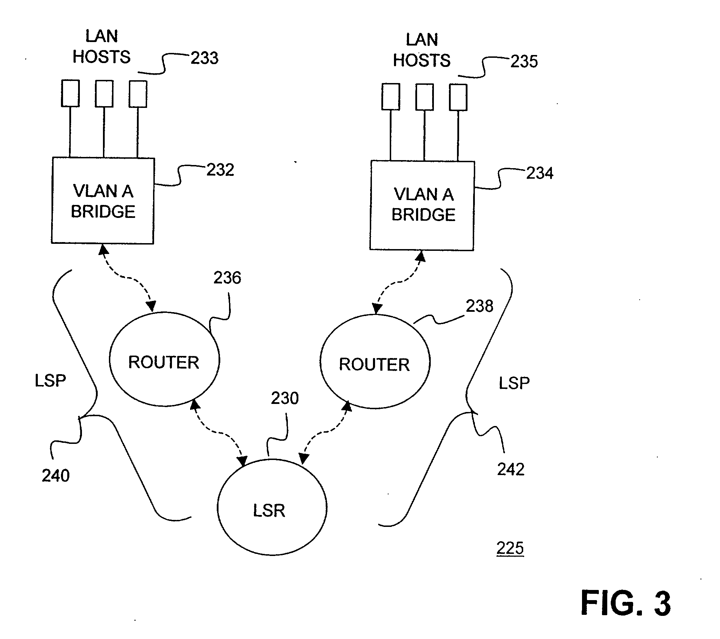

FIG. 3 is a system diagram of an MPLS network 225 in another embodiment according to the present invention. The MPLS network 225 includes an LSR 230, LSPs 240, 242 and VLAN A bridges 232, 234 as well as LAN hosts 233, 235 coupled to the VLAN A bridges 232, 234, respectively. The MPLS network 225 may also include other LSRs, LSPs, VLAN bridges, LAN hosts and/or other network devices. The LSPs 240 and 242 are shown as including routers 236 and 238, respectively, for illustrative purposes only. In practice, each of the LSPs 240 and 242 may include multiple routers and/or LSRs. The MPLS switching that will be described in reference to the MPLS network 225 may also apply to the MPLS network 200 of FIG. 2 depending on the configuration of the network devices illustrated in FIG. 2.

In the MPLS network 225, the VLAN A bridges 232 and 234 as well as the LSR 230 preferably are associated with the same VLAN, VLAN A, and the LSR 230 preferably is capable of bridging packets (e.g., frames) associated with VLAN A. However, it is not possible to bridge packets from one of the LAN hosts 233 coupled to the VLAN bridge 232 all the way to one of the LAN hosts 235 coupled to the VLAN bridge 234, when the router 236 and/or the router 238 do not have L2 bridging capability.

In this case, the VLAN A bridge 232 preferably functions as an Ingress-LSR (I-LSR) to encapsulate the packet from LAN hosts 233 using an MPLS label. The encapsulated packet preferably is then MPLS switched to the VLAN A bridge 234 over the LSPs 240 and 242, each of which may include LSRs in addition to the routers 236 and 238 that function as LSRs.

In the MPLS packet path, the LSR 230 may bridge the packet using its underlying (L2) protocol, and'then apply an MPLS label to the packet to MPLS switch it to the VLAN A bridge 234. In this case, the MPLS label of the packet received by the LSR 230 may be a special label reserved to be popped by the LSR 230 for the LSR 230 to bridge the packet and then apply a new MPLS label to it.

The VLAN A bridge 234 preferably then functions as an Egress-LSR (E-LSR) to pop the MPLS label and bridge the packet to the LAN hosts 235. When a PHP is used upstream of the VLAN A bridge 234 in the LSP 242, the MPLS label popping may actually be performed by the PHP, and not by the VLAN A bridge 234.

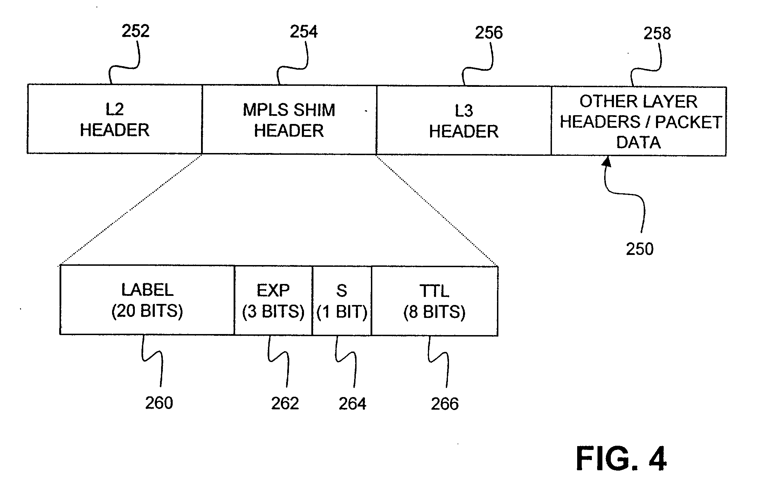

FIG. 4 shows format for an MPLS label. The MPLS label (in an MPLS shim header 254) is typically inserted between an L2 (data link layer) header 252 and an L3 (network layer) header 256. The MPLS label may also be embedded in the L2 header. For example, when the L2 layer used is Point-to-Point Protocol (PPP) or Media Access Control (MAC/Ethernet), the MPLS label may be inserted between the L2 header and the L3 header. For another example, when the L2 layer used is Asynchronous Transfer Mode (ATM) or Frame Relay, virtual path identifiers/virtual channel identifiers (VPIs/VCIs) and data link connection identifiers (DLCIs) may be used as MPLS labels, respectively.

The MPLS shim header 254 comprises a label field 260, an experimental use field (EXP) 262, a bottom of stack indicator (S) 264 and a time to live indicator (TTL) 266. The label field 260 carries the actual value of the label. When a labeled packed is received, the label value at the top of the stack is looked up. As a result of the successful lookup, the next hop to which the packet is to be forwarded is determined. Further, the operation to be performed on the label stack before forwarding (e.g., top level stack replacement, label stack entry popping and/or label stack entry addition) may be determined through the lookup.

The bottom of stack indicator 264 is set to one for the last entry in the label stack (i.e., for the bottom of the stack), and zero for all other label stack entries, and the time to live indicator 266 may be used to encode a time-to-live value.

Further, the experimental use field is reserved for experimental use.

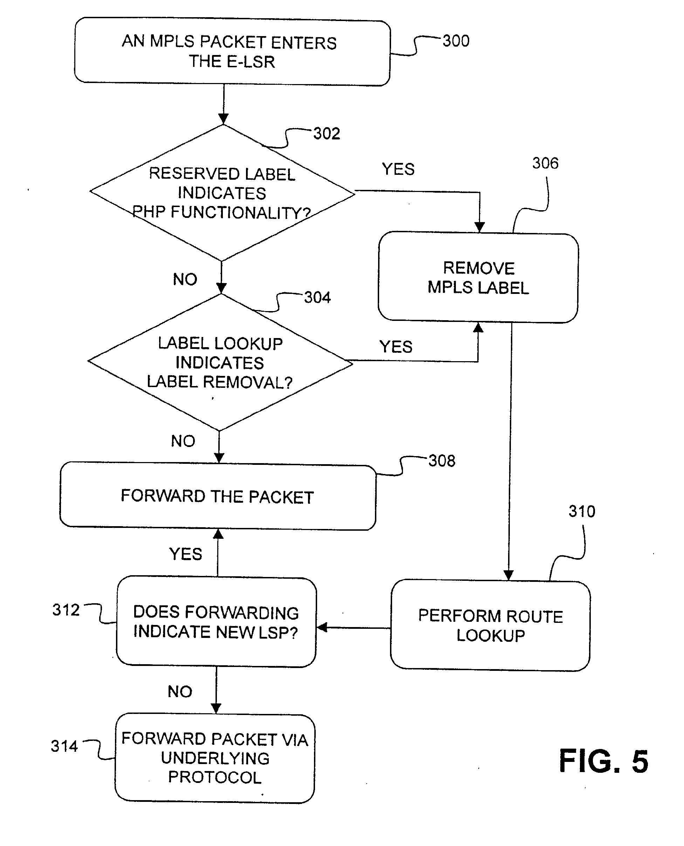

FIG. 5 is a flow diagram that illustrates a process of forwarding MPLS packets in an embodiment according to the present invention in reference to the MPLS network 200 of FIG. 2. In step 300, an MPLS packet enters the E-LSR 206 over an LSP from one of the VLAN bridges. Upon ingress into the E-LSR 206, the process in step 302 preferably checks whether the MPLS label is a reserved label indicating the PHP functionality is to be performed for the received MPLS packet. The MPLS label may have been introduced by the I-LSR (which is the same as the E-LSR 206 in the case of the MPLS network 200 in FIG. 2) or by another LSR in the tunnel where a normal PHP would happen, which typically is the LSR, which is immediately upstream of the E-LSR 206. If the MPLS label is a reserved label indicating PHP functionality, the E-LSR preferably removes (or pops) the MPLS label as indicated in step 306.

If, however, the MPLS label is not a label reserved for popping, the process in step 304 preferably performs label lookup to determine whether or not the MPLS label should be removed. The LSRs may be notified to remove the MPLS label via a signaling protocol such as, for example, RSVP or LDP. If the lookup indicates that the MPLS label is to be removed, the MPLS label preferably is removed as indicated in step 306. If not, the MPLS label is kept and not removed. In other embodiments, LSRs may also be statically configured to remove certain labels.

If the MPLS label is not removed, the process in step 308 may forward the MPLS packet over one of the LSPs 203, 205, 209 and 211 to one of the VLAN bridges. Prior to forwarding the MPLS packet, the label may be swapped; in other words, the E-LSR may function as any other LSR in the LSP and replace the MPLS label for a new MPLS label prior to MPLS switching the packet.

If the MPLS label is removed in step 306, the underlying packet preferably is examined and forwarded appropriately. In other words, the E-LSR 206 in step 310 preferably performs route lookup using, for example, IPv4 or IPv6 protocol to determine where to forward the packet. The E-LSR 206 may also perform bridging to determine where to forward the packet. If the forwarding information (e.g., from route lookup) indicates new LSP in step 312, the packet is forwarded as an MPLS packet with a new MPLS label over an LSP to one of the VLAN bridges. If the forwarding information does not indicate new LSP, the packet preferably is forwarded using underlying protocol, which may include L2 (bridging), L3 (e.g., IPv4 or IPv6) or any other suitable protocol. In other words, the packet can be forwarded in any suitable method. Since more than one tunnel can exist on the same interface with differing destinations, a packet may enter the LSR from one MPLS tunnel then be forwarded via switching over another MPLS tunnel on the same interface.

It will be appreciated by those of ordinary skill in the art that the invention can be embodied in other specific forms without departing from the spirit or essential character hereof. The present description is therefore considered in all respects to be illustrative and not restrictive. The scope of the invention is indicated by the appended claims, and all changes that come within the meaning and range of equivalents thereof are intended to be embraced therein.

## Claims

1. An L2/L3 network comprising:
a plurality of MPLS-enabled bridges;
an MPLS-enabled router; and
a plurality of label switched paths interconnecting respective bridges and the router,
wherein the bridges bridge local protocol data units, and switch non-local protocol data units to the router on respective ones of the plurality of label switched paths, whereupon the router routes the non-local protocol data units.

2. The L2/L3 network according to claim 1, wherein the label switched paths over which to send the non-local protocol data units are selected as a function of a virtual local area network associated with each non-local protocol data unit.

3. The L2/L3 network according to claim 1, wherein determination of whether the protocol data units are non-local is made as a function of a MAC address in each protocol data unit.

4. The L2/L3 network according to claim 1, wherein the router is capable of routing the protocol data units using IPX, IPv4, IPv6 or AppleTalk protocol.

5. The L2/L3 network according to claim 1, wherein the router is capable of removing an MPLS label from a respective one of the protocol data units.

6. The L2/L3 network according to claim 5, wherein the router removes the MPLS label from the respective protocol data unit prior to routing if the MPLS label indicates that penultimate hop pop function of popping the MPLS label is to be performed.

7. The L2/L3 network according to claim 5, wherein the router removes the MPLS label from the respective protocol data unit prior to routing if lookup of the MPLS label indicates that the MPLS label is to be popped.

8. The L2/L3 network according to claim 1, wherein each label switched path comprises one or more label switching routers.

9. The L2/L3 network according to claim 1, wherein the router operates as an ingress label switching router, as an egress label switching router, and as a label switching router at substantially same time at substantially line rate.

10. A method of forwarding protocol data units in an L2/L3 network comprising a plurality of MPLS-enabled bridges and an MPLS-enabled router interconnected over a plurality of label switched paths, the method comprising the steps of:
bridging local protocol data units from the bridges;
switching non-local protocol data units from the bridges to the router over respective ones of the plurality of label switched paths; and
routing the non-local protocol data units using the router.

11. The method of forwarding according to claim 10, wherein the label switched paths over which to send the non-local protocol data units are selected based on a virtual local area network associated with each protocol data unit.

12. The method of forwarding according to claim 10, wherein determination of whether the protocol data units are non-local is made as a function of a MAC address in each protocol data unit.

13. The method of forwarding according to claim 10, wherein the non-local protocol data units are routed using IPX, IPv4, IPv6 or AppleTalk Protocol.

14. The method of forwarding according to claim 10, the method further comprising the step of removing an MPLS label from respective one or more of the non-local protocol data units.

15. The method of forwarding according to claim 14, wherein the removing step comprises the step of removing the MPLS label from the respective non-local protocol data unit prior to routing if the MPLS label indicates that penultimate hop pop function of popping the MPLS label is to be performed.

16. The method of forwarding according to claim 14, wherein the removing step comprises the step of removing the MPLS label from the respective non-local protocol data unit prior to routing if lookup of the MPLS label indicates that the MPLS label is to be popped.

17. The method of forwarding according to claim 10, wherein each label switched path comprises one or more label switching routers.

18. The method of forwarding according to claim 10, wherein the router operates as an ingress label switching router, as an egress label switching router, and as a label switching router at substantially same time at substantially line rate.

19. A method of forwarding a packet in an MPLS network comprising an MPLS-enabled router and a plurality of MPLS-enabled VLAN bridges, the method comprising the steps of:
attaching a first MPLS label to the packet in one of the VLAN bridges in accordance with a VLAN associated with the packet;
sending the packet to the router over a first MPLS tunnel from said one of the VLAN bridges; and
routing the packet to another one of the VLAN bridges.

20. The method of forwarding according to claim 19, the method further comprising the step of label swapping the first MPLS label with a second MPLS label prior to forwarding the packet, wherein the packet is forwarded over a second MPLS tunnel.

21. The method of forwarding according to claim 19, the method further comprising the steps of removing the first MPLS label and routing the packet using IPX, IPv4, IPv6 or AppleTalk protocol.

22. The method of forwarding according to claim 21,
wherein the packet'is forwarded to an external network using IPX, IPv4, IPv6 or AppleTalk protocol.

23. The method of forwarding according to claim 21, the method further comprising the step of attaching a second MPLS label, wherein the packet is forwarded over a second MPLS tunnel, and wherein the second MPLS tunnel can comprise same label switching routers as the first MPLS tunnel.

24. The method of forwarding according to claim 19, further comprising the steps of removing the first MPLS label, bridging the packet, and attaching a second MPLS label to the packet, wherein the packet is forwarded over a second MPLS tunnel, and wherein the second MPLS tunnel can comprise same label switching routers as the first MPLS tunnel.

25. A communication network, the network comprising:
a plurality of first nodes having no actual routing capability;
a second node having an actual routing capability; and
at least one interconnection between each first node and said second node,
wherein each first node interacts with said second node over said at least one interconnection between said first node and said second node to provide an emulated routing capability to said first node.

26. The network according to claim 1, wherein said interaction includes transmitting at least one data unit for routing from said first node to said second node on at least one label switched path established on said at least one interconnection between said first node and said second node.
